# EUROPEAN PATENT SPECIFICATION

(11) **EP 3 498 665 B1**
(45) Date of publication and mention of the grant of the patent: **02.09.2020**
(21) Application number: 17208262.0
(22) Date of filing: 18.12.2017
(51) Int. Cl.: C01B 3/34, C10J 3/72

(54) **METHOD FOR THE PRODUCTION OF SYNTHESIS GAS**
VERFAHREN ZUR HERSTELLUNG VON SYNTHESEGAS
APPAREIL DE PRODUCTION DE GAZ DE SYNTHÈSE

(43) Date of publication of application: 19.06.2019
(73) Proprietor: Clariant International Ltd, 4132 Muttenz (CH)
(72) Inventor: DREISER, Christian, 65795 Hattersheim (DE); WACHSEN, Olaf, 84518 Garching (DE); LADE, Oliver, 61462 Königstein (DE); BRAND, Stefan, 69493 Hirschberg (DE); STEFANIDIS, Georgios, 3001 Leuven (NL)
(74) Representative: Paczkowski, Marcus

(56) References cited:
- WO-A1-2016/093492
- KR-A- 20140 084 553
- US-A1- 2008 296 294

## Description

The present invention relates to a method for the production of synthesis gas. In particular, the present invention is directed to a synthesis gas production method using a hot plasma, such as a microwave plasma, gasification of solid or liquid waste, including biomass.

Gasification is commonly defined as thermochemical conversion of solid or liquid carbon-based materials into a combustible gaseous product. Established gasification technologies, such as air or oxygen blown fixed bed, fluidized bed or entrained flow gasifiers, are operated in a range of 800 °C to 1400 °C and use a gasification agent for conversion. The product, commonly known as synthesis gas, contains carbon monoxide (CO) and hydrogen (H₂) as well as impurities such as tars, volatile or semi-volatile organic compounds, sulfur, ammonia, nitrogen oxides, sulfur oxides, hydrogen chloride and ashes. High levels of impurities require cost-intense synthetic gas clean-up for further processing. Common gasification technologies are dedicated to material species and narrow particle size distribution as well as low moisture content, increasing pretreatment costs and complexity. Further, the operation at high temperatures requires a burner, fuel, pipes and other installations. Required preheating of common gasifiers result in significant start-up times and are therefore only efficient when operated constantly over long-term period.

One alternative is the gasification by means of plasma, which is generated by an external power source. Plasma, as highly ionized gas, contains a significant number of electrically charged particles and is classified as the fourth state of matter. As plasma contains an equal number of free positive and negative charges, it is electrically neutral.

Plasma processes may be largely classified into thermal and hot plasma processes. Thermal plasma and arc torch plasmas are operated at very high temperature or require the use of electrodes with a limited lifetime, increasing material requirements and maintenance intervals (WO 2012/39751 A2, US 2010/0199557 A1).

Hot plasma systems, such as microwave plasma, can be far away from thermodynamic equilibrium by providing extremely high concentrations of chemically active species at concurrent low bulk temperatures. Other advantages of microwave plasma are the operation without electrodes or additional fuels and a conversion in an atmosphere of low oxygen content (EP 2 163 597 A1).

Common gasification technologies convert fossil raw materials, such as coal, to synthesis gas. The incineration of hazardous waste for mass reduction or destruction of pathogens and toxins prior to landfill is commonly known including the application of plasma (CN 204824145 U, WO 2011/14118 A2). Waste to energy concepts utilize the thermal energy of the conversion process as heat or convert the combustibles to electricity in a power plant. However, with regard to global changing raw material situation, the interest in utilization of novel material and energy sources as alternative to fossil materials is increasing. The primary utilization of biomass, as CO₂-neutral energy, through combustion for energy and heat as well as conversion to bio-based fuels such as biodiesel are actively conducted. A method for using biomass or waste to produce conversion products, such as synthesis gas for value-added products, is still challenging because of the above mentioned draw-backs of gasification technologies and the variations in bio-based raw material quality as well as the need for an additional hydrogen source, required for following conversion processes.

In existing biofuel processes, a large amount of biomass consisting mainly of lignin is difficult to become converted into fuel and is utilized e.g. thermally by intensive drying prior burning. A value-added conversion through gasification to syngas and potentially further conversion to fuel or electricity would be beneficial for the overall performance of such biofuel plants.

Several methods and devices for the plasma-catalytic conversion of materials are already known.

WO 2015/051893 A1 discloses such method and device for converting hydrocarbon-containing educts, such as gaseous or liquid hydrocarbons, by means of a plasma into chemical base materials.

WO 2016/040969 A1 discloses a method and a device for the production of synthesis gas from carbon-containing waste material, for example from solid organic waste material. In this method said waste material is introduced into a reaction chamber and is subjected therein to thermal pyrolysis. The synthesis gas and the solid residual materials are discharged from the reaction chamber and are further processed by subjecting these to plasma treatment.

EP 2 915 869A1 discloses an entrained flow gasifier using an integrated plasma temperatures below 3500°C in the gasification compartment. This system can be used to process solid or liquid materials, such as sawdust, and to convert this material into synthesis gas.

DE 10 2011 051 906 A1 discloses a method and a device for the gasification of coal or of carbon-containing solid materials together with water vapor and carbon dioxide. This method comprises introduction of water vapor and carbon dioxide into a gasification reactor, introduction of the solid particulate material into said reactor and forming a fluidized bed from these materials, and treating said materials in said reactor with a rotating plasma.

EP 1 419 220 B1 discloses a plasma pyrolysis and vitrification of organic material, such as solid waste material from different sources. The reactor comprises a carbon-catalyst bed which is heated by means of a plasma that is generated by several plasma arc generators which are arranged in a circle around said carbon-catalyst bed.

US 2008/0296294 A1 discloses an apparatus and a method for hydrogen production from gaseous, liquid or solid hydrocarbons involving the use of a steam-plasma torch.

While these known methods and devices allow the generation of synthesis gas from waste material there is still a need of a highly efficient gasification technology that is flexible towards feedstock quality and quantity, particle size and moisture content. Accordingly, a method for flexibly conversion of waste material into synthesis gas, preferably of biomass into synthesis gas through plasma gasification is desired. Furthermore, a method of conversion of waste material into synthesis gas which is easy to implement and uses readily available reactors is desired.

The present invention relates to a process for the production of synthesis gas by plasma gasification of solid or liquid carbon-containing or hydro-carbon-containing material comprising the steps:
(i) providing a solid and/or liquid feedstock comprising particulate carbon- or hydrocarbon-containing material or a mixture of both,
(ii) providing a carrier gas and combining this with the solid or liquid feedstock,
(iii) feeding said solid or liquid feedstock and said carrier gas as a feed stream into a reactor comprising a reaction chamber or into a vaporizer which is arranged upstream to said reactor,
(iv) introducing a swirl gas into the reactor which swirls around the feed stream and covers the interior walls of the reactor,
(v) treating said feed stream downstream the introduction of the swirl gas into the reactor with a hot plasma to generate a product stream comprising synthesis gas from said carbon- or hydrocarbon-containing material in the reaction chamber,
(vi) removing the product stream from the reaction chamber, and
(vii) separating the solid ingredients from the gaseous ingredients of the product stream.

In the process of this invention various solid and/or liquid carbon-containing or hydrocarbon-containing materials may be used. Examples of possible feedstock are biomass, coal, hydrocarbons, organic matter, municipal waste, polymers, cellulose-containing materials, lignin-containing materials, such as sunliquid® raw lignin, and mixtures thereof.

Examples of preferred feedstock materials are

### Pure lignin:

- Elemental composition in %: 61.68 C, 5.58 H, 26.93 O, 1.29 N, 2.06 S, 2.19 Ash
- Moisture 3.03 wt.-%
- Mean particle size 75 µm

### Clariant sunliquid® raw lignin

- Elemental composition in %: 47.5 C, 6 H, 31.3 O, 1.2 N, 0.1 S, 13.9 Ash
- Moisture 3 wt.-%
- Mean particle sizes 400 µm (< 1000 µm sieve fraction) and 100 µm (< 200 µm sieve fraction)

### Cellulose (Sigma Aldrich)

- Elemental composition in %: 44.7 C, 6.31 H, 48.75 O, 0.19 N, 0.01 S, 0.04 Ash
- Moisture 0.94 wt.-%
- Mean particle size 50 µm

The feedstock used in the method of this invention is particulate. Typically, the mean particle size of the solid or liquid feedstock is between 0.01 mm and 10 mm, preferably between 0.01 mm and 2 mm, even more preferred between 0.02 mm and 2 mm and most preferably between 0.05 mm to 1 mm.

The feedstock used in the method of this invention may be dry or humid. Preferably a humid feedstock, especially a water-containing feedstock is used. Typically, the water-content or other liquid content of the feedstock is between 0.05 wt.-% and 95 wt.-%, preferably between 0.05 wt.-% and 80 wt.-%, even more preferred between 0.05 wt.-% and 50 wt.-%, and most preferably between 0.1 wt.-% and 30 wt.-%, referring to the total amount of feedstock.

In a preferred embodiment of the process of the invention the solid and/or liquid carbon- or hydrocarbon-containing feedstock is combined with a liquid which is selected from the group consisting of water, organic solvents or combinations thereof. Preferably water is added to the solid and/or liquid carbon- or hydrocarbon-containing feedstock.

In another preferred embodiment of the process of the invention the solid or liquid feedstock is guided through a vaporizer which is arranged upstream to the reaction chamber. In this embodiment preferably liquid feedstock is used which is vaporized prior to the plasma treatment in the reaction chamber.

The particulate solid and/or liquid carbon- or hydrocarbon-containing feedstock is combined with a carrier gas. This gas has the function to carry the particulate feedstock into the reactor. Various types of carrier gas can be used. Examples of carrier gas are inert gases, oxygen-containing gases or synthesis gas. Preferably, oxygen-containing gases are used. These are typically oxygen ore preferably air. Other preferred gases are gases comprising oxygen and other gases, such as nitrogen, carbon dioxide, carbon monoxide, hydrocarbons, syngas, preferably gas derived from the product stream of the inventive process, or water-vapor containing air.

The carrier gas may be combined with the feedstock prior to introduction thereof into the reactor or at the reactor intake. The carrier gas may be added to the feedstock via one or more pipes which discharge the carrier gas into the feedstock stream. The pipe(s) may be equipped with nozzles at the discharge location.

In the process of this invention a swirl gas is used which protects the walls of the gasification device from the reactive species generated by the plasma treatment in the feedstock material. The composition of the swirl gas may be the same as the composition of the carrier gas. Preferably, the swirl gas should be inert as it does not participate in the reaction. That would decrease NOₓ-content and CO₂-content of the product stream and would also reduce thermal losses, because CO₂ and water vapor absorb/emit radiation. Preferred inert gases are nitrogen or noble gases, e.g. argon. But also air or a combination of water-vapor and air may be used as a swirl gas.

In the process of this invention the swirl gas may be introduced into the reactor at the reactor intake or at a position downstream thereof but above the location at which the feedstock is treated with the hot plasma. The swirl gas may be added to the reactor via one or more pipes which discharge the swirl gas into the reactor in a manner, that the feedstock-carrier-gas-stream is encased by the swirl gas. Preferably several pipes are available which introduce the swirl gas into the reactor in a circular manner, so that the swirl gas develops an encasement of the feedstock-carrier-gas-stream and moves in a helical manner between the inner reactor wall and the feedstock-carrier-gas-stream. Preferably the pipes introducing the swirl gas into the reactor are equipped with nozzles at the discharge location.

Typical conditions for the carrier gas and the swirl gas used in preferred embodiments of the process of this invention are as follows:
- carrier gas flow: 5 - 10 NI/min
- swirl gas flow: 20 - 30 NI/min
- swirl gas and carrier gas composition: air/N₂-ratio = 0.4 volumetric
- total gas flow (carrier + swirl): 25 - 35 NI/min

The plasma used in the process of this invention is a hot plasma which is far away from thermodynamic equilibrium, either because the ion temperature is different from the electron temperature, or because the velocity distribution of one of the species does not follow a Maxwell-Boltzmann distribution.

A hot plasma may be generated by using various methods, such as by using a gliding arc discharge, a plasma pencil, a plasma needle, a plasma jet, a dielectric barrier discharge, a resistive barrier discharge, a piezoelectric direct discharge, a glow discharge or preferably by using a microwave plasma generation.

A microwave plasma can be a hot plasma at about atmospheric pressure or above but not at low pressure.

Preferably the hot plasma is a microwave generated plasma within a pressure range between 1 and 5 bar, preferably between 1.1 and 2 bar.

In a preferred embodiment of the inventive process the plasma is energized with a microwave field contained in a waveguide.

Typical conditions for the gasification conditions in preferred embodiments of the process of this invention using microwave generated plasma are as follows:
- solid feed = less than 1.5 g/s, preferably 0.09 - 0.13 g/s
- O₂ to solid feed ratio = less than 1.0 molar, preferably 0.1 - 0.5 molar and most preferably about 0.3 molar
- equivalence ratio ER is between 0.2 and 0.5, preferably around 0.4 (actual air to fuel ratio devided by theoretical ratio (stoichiometry))
- net microwave power = less than 6000 W, preferably 1000 - 3000 W, and most preferably 1860 - 2500 W, controlled, for example, through average wall temperature of less than 1000 °C, preferably 300 - 800 °C, and most preferably about 500 °C
- average pressure in the reaction chamber 1-5 bar, preferably about 1.2 bar
- gas temperature at the outlet of the reaction chamber = 600 - 1500 °C, preferably 1100 - 1150 °C

After treatment of the feed stream with the hot plasma the produced synthesis gas, the carrier gas, the swirl gas and the non-reacted material is removed from the reaction chamber followed by removal of non-reacted material from the gaseous ingredients of the medium streaming through the reactor.

This may be performed by guiding the streaming medium through a filter means separating the solid ingredients from the gaseous ingredients or by reversing the flow direction of the gaseous ingredients and collecting the solid ingredients.

Preferably, the reactor is a vertical inner tube through which the feedstock-carrier-gas-stream encased by the swirl gas is streaming from top to bottom and is treated with the hot plasma during this passage. At the bottom of this inner tube the flow direction of the gaseous ingredients of this stream is reversed and the gaseous ingredients are introduced into an outlet tube which envelops the inner reactor tube. The gaseous ingredients leave the reactor by streaming from the lower portion of the outlet tube to the upper portion of the outlet tube and are discharged therefrom. The solid ingredients of the stream, for example ash and unconverted solids, leaving the inner reactor tube, however, are collected below the outlet of said inner reactor tube. These solid ingredients are moving from top to bottom controlled by gravity and are discharged at the bottom of the reactor assembly.

In a preferred embodiment of the process of this invention the feedstock gas stream and the carrier gas-stream are introduced into a vertical tubular reactor through a feedstock feeding means and through a carrier gas feeding means which are installed at the top of the tubular reactor, downstream of the feedstock feeding means and of the carrier gas feeding means the swirl gas is introduced into the tubular reactor through a swirl gas feeding means and downstream to the swirl gas feeding means the gas streams are treated by a hot plasma.

The gaseous ingredients discharged from the reactor comprise syngas, carrier gas, swirl gas and optionally other gaseous ingredients of the stream, for example water vapor. After the gaseous stream has been discharged from the reactor this stream is worked-up. For example, the discharged gaseous stream may be treated in a gas cleaning operation removing residual dust particles and/or may be treated to remove residual oxygen by using a part of the hydrogen present in the syngas.

The process of the present invention provides several benefits. Surprisingly, it has now been found that
- this process provides a sustainable and "green" syngas alternative through production from various particulate feedstock materials including renewable biomass as well as renewable energy
- the process is tolerant to various feedstock materials, including particle size and moisture; "wet" feed can be processed, therefore the H₂/CO-ratio can be tuned enabling Power-to-X technologies (X being syngas, heat, electricity or other valuable products), because no additional H₂ source is required for further downstream processing
- process start-up is very fast, therefore peak treatment of feedstock materials and also of electricity generation is enabled, peak load management is enabled by this technology as well as chemical storage of peak electricity; fast start-up beneficial compared to conventional gasification since gasifier preheating is not necessary
- microwave energy may be directly used at relatively low temperatures and no need for torches is beneficial for materials requirements plus depending on feedstock materials no additional oxidizing agent or fuel is required
- in-situ cleaning with oxygen/air plasma is possible and fast
- autarkic process for decentralized application is possible in combination with e.g. solid oxide fuel cell
- process uses no electrodes for plasma generation
- process provides no torches as the reactor itself is the "torch"
- process uses lower temperatures compared to conventional arc plasma. This implies higher exergy efficiency, less carbon formation, less NOₓ emission and safer operation
- process is flexible with respect to the carrier gas (e.g. air, N₂, CO₂, steam, recycle of part of product). This enables a tunable product composition, e.g. H₂/CO ratio)
- process enables flexible scale up / scale down based on microwave frequency tuning. Essentially the system can be made modular
- process allows high efficiency of conversion of electric energy to heat (e.g. about 90 %) if the reactor is properly insulated
- unlike other prior art processes, the process of the invention does not require any carrier/swirl gas or solids preheating before the main processing in the plasma reactor
- the solids feed is driven through the plasma reactor upstream of the ignition point and is therefore treated all along the plasma zone length, which intensifies feedstock conversion in the flow rates operating regime where plasma is stable. In prior art processes the solids enter in the reactor from a side port downstream of the ignition point. As a result, the contact time of the solids with the plasma is much less and the treatment is less intense, as the region around the ignition point is the hottest and most reactive one.

In a preferred embodiment of the process of the invention a solid feedstock comprising particulate hydrocarbon-containing material is used, preferably lignin or a lignin-containing material, most preferably wood.

In another preferred embodiment of the process of the invention a particulate carbon-containing material or a particulate hydrocarbon-containing material is fed from a storage vessel via a transportation means, preferably via a screw conveyer, is combined with air as a carrier gas and it introduced into the top of a vertical reactor tube.

In another preferred embodiment of the process of the invention a carbon-containing material or a hydrocarbon-containing material is comminuted before introduction of this into the reactor and/or said material is humidified by adding water or the water content of said material is reduced by drying said material.

In another preferred embodiment of the process of the invention the product stream after treatment with the hot plasma is subjected to rapid cooling, for example by introduction of said product stream into a cooling tube. Such tube may be equipped, for example, with cooling means at the outside of said tube, for example by using a finned tube or by using a tube being equipped with heat exchanger means.

In another preferred embodiment of the inventive process synthesis gas is produced from solid or liquid waste material, including biomass, through microwave plasma gasification using a vertical tube reactor. The utilized waste material is fed from a storage vessel with a screw conveyer and enters the microwave plasma setup via top with a carrier gas. The waste material potentially requires milling, drying or moistening to the aspired composition prior to processing. A swirl gas is blown inside the reactor via a set of nozzles to centrifugally contain the plasma. The plasma is energized with a microwave field, contained in a waveguide. The waste material is converted into syngas by contacting the plasma. Unconverted solids and ash are collected below the reactor, while the gaseous products exit the reactor and are subjected to gas cleaning.

The process of the present invention can be performed in a reactor which is generally known from the prior art. An example of a reactor is disclosed in www.tudelft.nl/reinventthetoilet (flyer: syngas/gas cleaning).

The synthesis gas stream produced in the process of the present invention may be used in a solid oxide fuel cell, in other thermal, chemical or catalytic conversion processes or in combinations thereof.

### EXAMPLES

The examples which follow are intended to illustrate the subject matter of the invention without restricting it thereto.

Feedstock composition examples are presented in the following table 1.

**Table 1: Example feedstock compositions**

| | Ex. 1 | Ex. 2 | Ex. 3 | Ex. 4 |
|---|---|---|---|---|
| Molar Composition (%) | Pure Lignin | Clariant raw lignin I | Clariant raw lignin II | Cellulose |
| C | 61.68 | 47.5 | 47.5 | 44.7 |
| H | 5.58 | 6 | 6 | 6.31 |
| O | 26.93 | 31.3 | 31.3 | 48.75 |
| N | 1.29 | 1.2 | 1.2 | 0.19 |
| S | 2.06 | 0.1 | 0.1 | 0.01 |
| Ash | 2.19 | 13.9 | 13.9 | 0.04 |
| Mean particle size (µm) | 75 | 400 | 100 | 50 |
| Moisture (wt-%) | 3.03 | 3 | 3 | 0.94 |

### Example methods of use

The feedstock compositions of Examples Ex. 1 to 4 can be gasified by using the following exemplary gasification conditions.

**Table 2: Example gasification conditions**

| | Ex. 1 | Ex. 2 | Ex. 3 | Ex. 4 | Ex. 5 |
|---|---|---|---|---|---|
| carrier flow (NI/min) | 5 | 5 | 5 | 7.5 | 10 |
| swirl flow (NI/min) | 30 | 25 | 20 | 27.5 | 25 |
| total Flow (NI/min) | 35 | 30 | 25 | 35 | 35 |
| air/N2-ratio (volumetric) | 0.4 | 0.4 | 0.4 | 0.4 | 0.4 |
| solid feed (g/s) | 0.13 | 0.11 | 0.09 | 0.13 | 0.13 |
| comment | base case | overall flow variation | | flow ratio variation | |

The gasification described in table 2 has been carried out in a gasification reactor with the following set-up:
Biomass enters the reactor via the top with a carrier gas. The reactor is a vertically arranged inner tube. Inside the reactor a swirl gas is blown in via a set of nozzles to centrifugally contain the plasma. The plasma is energized with a microwave field contained in a waveguide. Contacting the plasma with the biomass converts the biomass feedstock into syngas. Ash and unconverted solids are collected below the reactor, while the gaseous products exit the reactor through an outer tube which envelops the inner tube. The gaseous products are processed through simple gas cleaning, then the gas is conditioned for offline GC analysis.

The following table shows the N₂-free transient results for fast start-up and steady state conditions.

| Time [Seconds] | H₂ [Mol-%] | CO [Mol-%] | CO₂ [Mol-%] | O₂ [Mol-%] | CH₄ [Mol-%] |
|---|---|---|---|---|---|
| 30 | 0.29 | 0.29 | 0.00 | 0.43 | 0.00 |
| 60 | 0.33 | 0.47 | 0.07 | 0.13 | 0.00 |
| 90 | 0.25 | 0.50 | 0.13 | 0.13 | 0.00 |
| 120 | 0.25 | 0.50 | 0.19 | 0.06 | 0.00 |
| 150 | 0.28 | 0.50 | 0.17 | 0.06 | 0.00 |
| 180 | 0.30 | 0.50 | 0.15 | 0.05 | 0.00 |

In the following table the N₂-, O₂- and CH₄-free composition of synthetic gas product stream after gasification using feedstock material of Ex. 2 from table 1 and using gasification conditions from table 2 is shown.

**Table 2: gasification conditions**

| | H₂ [Mol-%] | CO [Mol-%] | CO₂ [Mol-%] | H₂/CO₂ - |
|---|---|---|---|---|
| Ex. 1 | 38.0 | 53.0 | 9.0 | 0.72 |
| Ex. 2 | 34.7 | 50.3 | 15.0 | 0.69 |
| Ex. 3 | 41.3 | 53.0 | 5.6 | 0.78 |
| Ex. 4 | 36.6 | 55.7 | 7.8 | 0.66 |
| Ex. 5 | 31.2 | 50.0 | 18.7 | 0.62 |

## Claims

1. A process for the production of synthesis gas by plasma gasification of solid and/or liquid carbon-containing or hydrocarbon-containing material comprising the steps:
(i) providing a solid and/or liquid feedstock comprising particulate carbon- or hydrocarbon-containing material or a mixture of both,
(ii) providing a carrier gas and combining this with the solid or liquid feedstock,
(iii) feeding said solid or liquid feedstock and said carrier gas as a feed stream into a reactor comprising a reaction chamber or into a vaporizer which is arranged upstream to said reactor,
(iv) introducing a swirl gas into the reactor which swirls around the feed stream and covers the interior walls of the reactor,
(v) treating said feed stream downstream the introduction of the swirl gas into the reactor with a hot plasma to generate a product stream comprising synthesis gas from said carbon- or hydrocarbon-containing material in the reaction chamber,
(vi) removing the product stream from the reaction chamber, and
(vii) separating the solid ingredients from the gaseous ingredients of the product stream.

2. The process according to claim 1, wherein feedstock is selected from biomass, coal, hydrocarbons, organic matter, municipal waste, polymers, cellulose-containing materials, lignin-containing materials and mixtures thereof.

3. The process according to claim 2, wherein the feedstock comprises lignin or a lignin-containing material, preferably wood.

4. The process according to at least one of claims 1 to 3, wherein the feedstock used has a mean particle diameter between 0.01 mm and 10 mm, preferably between 0.01 mm and 2 mm, even more preferred between 0.02 mm and 2 mm and most preferably between 0.05 mm to 1 mm.

5. The process according to claim 4, wherein the feedstock used is a water-dry or preferably humid.

6. The process according to claim 5, wherein the feedstock used is a water-containing feedstock.

7. The process according to at least one of the claims 1 to 6, wherein the carrier gas is air or water-vapor containing air.

8. The process according to at least one of the claims 1 to 6, wherein the swirl gas is an inert gas, preferably nitrogen or a noble gas.

9. The process according to at least one of the claims 1 to 6, wherein the swirl gas is air or water-vapor containing air.

10. The process according to at least one of the claims 1 to 9, wherein the solid or liquid feedstock is guided through a vaporizer which is arranged upstream to the reaction chamber.

11. The process according to at least one of the claims 1 to 10, wherein the hot plasma is a microwave generated plasma.

12. The process according to claim 11, wherein the microwave generated plasma is within a pressure range between 1 and 5 bar, preferably between 1.1 and 2 bar.

13. The process according to at least one of the claims 1 to 12, wherein a particulate carbon-containing material or a particulate hydrocarbon-containing material is fed from a storage vessel via a transportation means is combined with air as a carrier gas and is introduced into the top of a vertical reactor tube.

14. The process according to at least one of the claims 1 to 13, wherein a carbon-containing material or a hydrocarbon-containing material is comminuted before introduction of this into the reactor and/or wherein said material is humidified by adding water or wherein the water content of said material is reduced by drying said material.

15. The process according to at least one of the claims 1 to 14, wherein the feedstock gas stream and the carrier gas-stream are introduced into a vertical tubular reactor through a feedstock feeding means and through a carrier gas feeding means which are installed at the top of the tubular reactor, downstream of the feedstock feeding means and of the carrier gas feeding means the swirl gas is introduced into the tubular reactor through a swirl gas feeding means and downstream to the swirl gas feeding means the gas streams are treated by a hot plasma.

16. The process according to at least one of the claims 1 to 15, wherein the product stream after treatment with the hot plasma is subjected to rapid cooling.

## Patentansprüche

1. Verfahren zur Herstellung von Synthesegas durch Plasmavergasung von festen und/oder flüssigen kohlenstoffhaltigen oder kohlenwasserstoffhaltigen Rohstoffen, das die folgenden Schritte umfasst:
(i) Bereitstellung eines festen und/oder flüssigen Einsatzstoffs, der teilchenförmige kohlenstoff- oder kohlenwasserstoffhaltige Rohstoffe oder eine Mischung von beidem umfasst,
(ii) Bereitstellung eines Trägergases, das man mit dem festen oder flüssigen Einsatzstoff vereinigt,
(iii) Zuführung des festen oder flüssigen Einsatzstoffs und des Trägergases als Einsatzstrom in einen eine Reaktionskammer umfassenden Reaktor oder in einen Verdampfer, der dem Reaktor vorgeschaltet ist,
(iv) Einbringung eines Wirbelgases in den Reaktor, das um den Einsatzstrom herumwirbelt und die Innenwände des Reaktors bedeckt,
(v) Behandlung des Einsatzstroms mit einem heißen Plasma stromabwärts von der Einbringung des Wirbelgases in den Reaktor zur Erzeugung eines Synthesegas aus den kohlenstoff- oder kohlenwasserstoffhaltigen Rohstoffen umfassenden Produktstroms in der Reaktionskammer,
(vi) Entfernung des Produktstroms aus der Reaktionskammer und
(vii) Trennung der festen Bestandteile von den gasförmigen Bestandteilen des Produktstroms.

2. Verfahren nach Anspruch 1, wobei der Einsatzstoff aus Biomasse, Kohle, Kohlenwasserstoffen, organischer Substanz, Siedlungsabfällen, Polymeren, cellulosehaltigen Rohstoffen, ligninhaltigen Rohstoffen und Mischungen davon ausgewählt ist.

3. Verfahren nach Anspruch 2, wobei der Einsatzstoff Lignin oder einen ligninhaltigen Rohstoff, vorzugsweise Holz, umfasst.

4. Verfahren nach mindestens einem der Ansprüche 1 bis 3, wobei der verwendete Einsatzstoff einen mittleren Teilchendurchmesser zwischen 0,01 mm und 10 mm, vorzugsweise zwischen 0,01 mm und 2 mm, sogar noch weiter bevorzugt zwischen 0,02 mm und 2 mm und ganz besonders bevorzugt zwischen 0,05 mm bis 1 mm aufweist.

5. Verfahren nach Anspruch 4, wobei der verwendete Einsatzstoff wassertrocken oder vorzugsweise feucht ist.

6. Verfahren nach Anspruch 5, wobei der verwendete Einsatzstoff ein wasserhaltiger Einsatzstoff ist.

7. Verfahren nach mindestens einem der Ansprüche 1 bis 6, wobei das Trägergas Luft oder wasserdampfhaltige Luft ist.

8. Verfahren nach mindestens einem der Ansprüche 1 bis 6, wobei das Wirbelgas ein Inertgas, vorzugsweise Stickstoff oder ein Edelgas, ist.

9. Verfahren nach mindestens einem der Ansprüche 1 bis 6, wobei das Wirbelgas Luft oder wasserdampfhaltige Luft ist.

10. Verfahren nach mindestens einem der Ansprüche 1 bis 9, wobei der feste oder flüssige Einsatzstoff durch einen der Reaktionskammer vorgeschalteten Verdampfer geführt wird.

11. Verfahren nach mindestens einem der Ansprüche 1 bis 10, wobei das heiße Plasma ein durch Mikrowellen erzeugtes Plasma ist.

12. Verfahren nach Anspruch 11, wobei das durch Mikrowellen erzeugte Plasma in einem Druckbereich zwischen 1 und 5 bar, vorzugsweise zwischen 1,1 und 2 bar, liegt.

13. Verfahren nach mindestens einem der Ansprüche 1 bis 12, wobei ein teilchenförmiger kohlenstoffhaltiger Rohstoff oder ein teilchenförmiger kohlenwasserstoffhaltiger Rohstoff, der von einem Speicherbehälter über eine Transporteinrichtung zugeführt wird, mit Luft als Trägergas vereinigt wird und in das obere Ende eines vertikalen Reaktorrohrs eingebracht wird.

14. Verfahren nach mindestens einem der Ansprüche 1 bis 13, wobei ein kohlenstoffhaltiger Rohstoff oder ein kohlenwasserstoffhaltiger Rohstoff vor seiner Einbringung in den Reaktor zerkleinert wird und/oder wobei der Rohstoff durch die Zugabe von Wasser befeuchtet wird oder wobei der Wassergehalt des Rohstoffs durch Trocknung des Rohstoffs verringert wird.

15. Verfahren nach mindestens einem der Ansprüche 1 bis 14, wobei der Einsatzstoffgasstrom und der Trägergasstrom durch eine Einsatzstoffzuführungseinrichtung und durch eine Trägergaszuführungseinrichtung, die am oberen Ende des Rohrreaktors angebracht sind, in einen vertikalen Rohrreaktor eingebracht werden, wobei stromabwärts der Einsatzstoffzuführungseinrichtung und der Trägergaszuführungseinrichtung das Wirbelgas durch eine Wirbelgaszuführungseinrichtung in den Rohrreaktor eingebracht wird, und wobei stromabwärts der Wirbelgaszuführungseinrichtung die Gasströme mit einem heißen Plasma behandelt werden.

16. Verfahren nach mindestens einem der Ansprüche 1 bis 15, wobei der Produktstrom nach der Behandlung mit dem heißen Plasma einer raschen Kühlung unterworfen wird.

## Revendications

1. Procédé pour la production de gaz de synthèse par gazéification au plasma d'une matière solide et/ou liquide contenant du carbone ou contenant un hydrocarbure comprenant les étapes :
(i) mise à disposition d'une matière première solide et/ou liquide comprenant une matière particulaire contenant du carbone ou un hydrocarbure ou un mélange des deux,
(ii) mise à disposition d'un gaz porteur et combinaison de celui-ci avec la matière première solide ou liquide,
(iii) alimentation de ladite matière première solide ou liquide et dudit gaz porteur en tant qu'un flux d'alimentation dans un réacteur comprenant un compartiment de réaction ou dans un vaporisateur qui est agencé en amont dudit réacteur,
(iv) introduction d'un gaz tourbillonnant dans le réacteur qui tourbillonne autour du flux d'alimentation et recouvre les parois intérieures du réacteur,
(v) traitement dudit flux d'alimentation en aval de l'introduction du gaz tourbillonnant dans le réacteur avec un plasma chaud pour générer un flux de produit comprenant du gaz de synthèse à partir de ladite matière contenant du carbone ou un hydrocarbure dans le compartiment de réaction,
(vi) élimination du flux de produit du compartiment de réaction, et
(vii) séparation des ingrédients solides des ingrédients gazeux du flux de produit.

2. Procédé selon la revendication 1, la matière première étant choisie parmi de la biomasse, du charbon, des hydrocarbures, de la matière organique, des déchets municipaux, des polymères, des matières contenant de la cellulose, des matières contenant de la lignine et des mélanges correspondants.

3. Procédé selon la revendication 2, la matière première comprenant de la lignine ou une matière contenant de la lignine, préférablement du bois.

4. Procédé selon au moins l'une des revendications 1 à 3, la matière première utilisée possédant un diamètre moyen de particule compris entre 0,01 mm et 10 mm, préférablement entre 0,01 mm et 2 mm, mieux encore entre 0,02 mm et 2 mm et le plus préférablement entre 0,05 mm et 1 mm.

5. Procédé selon la revendication 4, la matière première utilisée étant sèche d'eau ou préférablement humide.

6. Procédé selon la revendication 5, la matière première utilisée étant une matière première contenant de l'eau.

7. Procédé selon au moins l'une des revendications 1 à 6, le gaz porteur étant de l'air ou de l'air contenant de la vapeur d'eau.

8. Procédé selon au moins l'une des revendications 1 à 6, le gaz tourbillonnant étant un gaz inerte, préférablement de l'azote ou un gaz noble.

9. Procédé selon au moins l'une des revendications 1 à 6, le gaz tourbillonnant étant de l'air ou de l'air contenant de la vapeur d'eau.

10. Procédé selon au moins l'une des revendications 1 à 9, la matière première solide ou liquide étant guidée à travers un vaporisateur qui est agencé en amont du compartiment de réaction.

11. Procédé selon au moins l'une des revendications 1 à 10, le plasma chaud étant un plasma généré par micro-ondes.

12. Procédé selon la revendication 11, le plasma généré par micro-ondes étant dans une plage de pression comprise entre 1 et 5 bars, préférablement entre 1,1 et 2 bars.

13. Procédé selon au moins l'une des revendications 1 à 12, une matière particulaire contenant du carbone ou une matière particulaire contenant un hydrocarbure étant alimentée à partir d'une cuve de stockage via un moyen de transport, étant combinée avec de l'air en tant que gaz porteur et étant introduite dans le sommet d'un tube de réacteur vertical.

14. Procédé selon au moins l'une des revendications 1 à 13, une matière contenant du carbone ou une matière contenant un hydrocarbure étant broyée avant introduction de celle-ci dans le réacteur et/ou ladite matière étant humidifiée en ajoutant de l'eau ou la teneur en eau de ladite matière étant réduite en séchant ladite matière.

15. Procédé selon au moins l'une des revendications 1 à 14, le flux gazeux de matière première et le flux de gaz porteur étant introduits dans un réacteur tubulaire vertical par l'intermédiaire d'un moyen d'alimentation en matière première et par l'intermédiaire d'un moyen d'alimentation en gaz porteur qui sont installés au sommet du réacteur tubulaire, en aval du moyen d'alimentation en matière première et du moyen d'alimentation en gaz porteur le gaz tourbillonnant étant introduit dans le réacteur tubulaire par l'intermédiaire d'un moyen d'alimentation en gaz tourbillonnant et en aval du moyen d'alimentation en gaz tourbillonnant les flux gazeux étant traités par un plasma chaud.

16. Procédé selon au moins l'une des revendications 1 à 15, le flux de produit après traitement avec le plasma chaud étant soumis à un refroidissement rapide.
